(19) Europäisches Patentamt
European Patent Office
Office européen des brevets

(11) **EP 1 548 080 B1**

(12) **EUROPÄISCHE PATENTSCHRIFT**

(45) Veröffentlichungstag und Bekanntmachung des Hinweises auf die Patenterteilung:
**26.03.2008 Patentblatt 2008/13**

(51) Int Cl.:
***C09J 7/02*** ^(2006.01)

(21) Anmeldenummer: **04106239.9**

(22) Anmeldetag: **02.12.2004**

(54) **Technisches Klebeband und Verfahren zu seiner Herstellung**

Technical adhesive tape and process for its manufacture

Ruban adhésif technique et son procédé de fabrication

(84) Benannte Vertragsstaaten:
**AT CH DE IT LI**

(30) Priorität: **18.12.2003 DE 10359630**

(43) Veröffentlichungstag der Anmeldung:
**29.06.2005 Patentblatt 2005/26**

(73) Patentinhaber: **Coroplast Fritz Müller GmbH & Co. KG**
**42279 Wuppertal (DE)**

(72) Erfinder:
 • **Lodde, Christoph**
 **44229, Dortmund (DE)**
 • **Frigge, Christoph**
 **45549 Sprockhövel (DE)**

(74) Vertreter: **Patentanwälte**
**Dr. Solf & Zapf**
**Schlossbleiche 20**
**42103 Wuppertal (DE)**

(56) Entgegenhaltungen:
 CH-A5- 687 328          DE-A1- 3 935 097
 DE-A1- 4 211 448

 • **DATABASE WPI Section Ch, Week 199403 Derwent Publications Ltd., London, GB; Class A14, AN 1994-023088 XP002319284 & JP 05 331435 A (SEKISUI CHEM IND CO LTD) 14. Dezember 1993 (1993-12-14)**

**Beschreibung**

Die vorliegende Erfindung betrifft ein technisches Klebeband, insbesondere für den Einsatz im Bauwesen, mit einem bandförmigen Träger und mit einer zumindest auf einer Seite aufgetragenen druckempfindlichen Klebebeschichtung, die aus einem UV-vernetzten Haftklebstoff auf Acrylatbasis besteht und ein spezifisches Flächengewicht von mindestens 100 g/m$^2$ aufweist. Des Weiteren betrifft die vorliegende Erfindung ein Verfahren zur Herstellung eines derartigen technischen Klebebandes.

Im Baubereich werden heute zahlreiche technische Klebebänder eingesetzt. Zu nennen sind hier beispielsweise Isolierbänder, Korrosionsschutzbandagen, Aluminiumklebebänder und gewebeverstärkte Folienklebebänder, sog. Duct-Tapes. Diese Bänder werden gewöhnlich einseitig mit einem Haftklebstoff beschichtet, für den Auftragsgewichte von ca. 15 - 80 g/m$^2$ üblich sind.

Für Spezialanwendungen, wie z.B. für die Verklebung von Dampfsperren oder Dampfbremsen, werden darüber hinaus Klebebänder aus imprägniertem Papier oder gelegeverstärkten Folien mit extrem hohen Auftragsgewichten von etwa 200 g/m$^2$ eingesetzt, wie dies z.B. in der CH 687 328 A5 beschrieben ist. Der hohe Klebstoffauftrag ermöglicht eine besonders aggressive Haftung auf rauhen Untergründen, auch unter den gerade im Baustellenbereich häufig anzutreffenden nicht idealen Verklebebedingungen, wie sie z.B. staubige, leicht feuchte oder kalte Untergründe darstellen.

Derart hohe Auftragsgewichte lassen sich vorteilhaft mit sogenannten Schmelzklebstoffen aufbringen. Demgegenüber haben Dispersionsklebstoffe oder Lösemittelklebstoffe den Nachteil, daß während der Beschichtung die Lösemittel bzw. Wasser als Dispergiermittel entfernt werden müssen. Neben dem dafür erforderlichen hohen Energieaufwand und dem bei Lösemittelklebstoffen zusätzlich erforderlichen Recyclingaufwand für die umweltverträgliche Rückgewinnung der Lösemittel ist der Hauptnachteil dieser Techniken die geringe Produktionsgeschwindigkeit. Da der Trocknungsvorgang dicker Schichten von Dispersions- oder Lösemittelklebstoffen immer mit einem Diffusionsprozeß des Lösemittels/Wasser von der Schichtunterseite zur Oberfläche verbunden und ein vorzeitiges oberflächliches Verfilmen unbedingt zu vermeiden ist, müssen solche Trocknungsvorgänge relativ langsam ablaufen. Um überhaupt in einem kontinuierlichen Prozeß arbeiten zu können, sind daher lange Trockenkanäle notwendig. Dispersionsklebstoffe haben den zusätzlichen Nachteil, dass sie große Mengen an Emulgatoren enthalten, die wiederum die Feuchtigkeitsbeständigkeit der mit ihnen beschichteten Klebebänder herabsetzen.

Schmelzhaftklebstoffe basieren heute vornehmlich auf Synthesekautschuk als Basispolymer, das mit Harzen und Weichmachern klebrig gemacht wurde. Diese Klebstoffe haben den Nachteil, daß sie aufgrund ihres ungesättigten chemischen Charakters nur eine begrenzte Witterungs- und UV-Stabilität besitzen.

Seit etwa 10 Jahren werden zunehmend auch auf Acrylaten basierende Rohstoffe für Schmelzhaftklebstoffe vermarktet, die jedoch für die Ausprägung der Haftklebrigkeit einer zusätzlichen Vernetzung mittels UV-Strahlung bedürfen. Problematisch bei der Vernetzung dickerer Schichten ist der sich dabei ausbildende Vernetzungsgradient. Da das eingestrahlte UV-Licht der vom Rohstoffhersteller zur Vernetzung empfohlenen Quecksilber-Mitteldruckstrahler bereits im oberen Bereich der Klebebeschichtung gemäß dem Lambert-Beer'schen Gesetz weitgehend absorbiert wird, werden darunterliegende Bereiche nicht mehr ausreichend bestrahlt und vernetzt. UV-vernetzende Acrylatschmelzhaftklebstoffe werden daher ausdrücklich nur für Auftragsgewichte von ca. 2 - 80 g/m$^2$, in Ausnahmefällen bis 100 g/m$^2$, eingesetzt.

Die oben erwähnten Bau-Spezialklebebänder mit hohen Auftragsgewichten erfordern aufgrund ihres Einsatzes einen alterungsbeständigen Klebstoff. Sie werden vornehmlich mit Acrylatklebstoffen beschichtet, wobei jedoch eine Verwendung von UV-vernetzenden Acrylatklebstoffen für diese Anwendung aus den oben angeführten Gründen bisher unbekannt ist. Aus Kostengründen werden in der Regel keine Lösemittelklebstoffe, sondern Dispersionsklebstoffe eingesetzt.

Einem Fachvortrag auf dem 19. Münchener Klebstoff- und Veredelungsseminar, M. Schreiber, H. Braun: "UV-vernetzbare Haftklebstoffe", 1994, S. 141-148 sind Hinweise auf ein technisches Klebeband der eingangs genannten Art zu entnehmen. In dem Vortrag wird primär der Einsatz von UV-vernetzbaren Haftklebstoffen als zumindest auf einer Seite auftragbare druckempfindliche Klebebeschichtung, insbesondere bei Etiketten, behandelt. Dabei werden unter anderem auch Anwendungen der UV-vernetzbare Haftklebstoffe in der Klebebandindustrie und - als ungelöste Problematik - die Klebeschichtung von Klebebändern mit einem spezifischen Flächengewicht von mehr als 100 g/m$^2$ erwähnt.

In der Fachliteratur sind nur ungenaue Angaben über die zur Vernetzung einer Klebebeschichtung erforderliche UV-Dosis zu finden. Meist finden sich lediglich Angaben über die elektrische Leistung in W/cm der zur Vernetzung eingesetzten Lampen. Dabei ist zu beachten, dass die Messung der im UV-Bereich eingestrahlten Leistung abhängig vom eingesetzten Detektortyp und seiner spektralen Empfindlichkeit ist und daher die Angaben in der Literatur nicht unmittelbar vergleichbar sind.

Aus der Database WPI Section Ch, Week 199403 Derwent Publications Ltd. London, GB, Class A14, AN 1994-023088 XP002319284 & JP 05 331435 A (Sekisui Chem. Ind. Co. Ltd.) vom 14. Dezember 1993 ist ein Klebeband bekannt, das als "masking tape for painting" eingesetzt werden soll. In der Kleberbeschichtung dieses bekannten Bandes findet sich eine fotopolymerisierte acrylathaltige Masse, die eine spezifische Flächenmasse im Bereich von 150 g/m² aufweist. An ein solches Abdeckband für Malerarbeiten wird insbesondere die Forderung gestellt, dass es nach der Vornahme des Anstrichs leicht und rückstandsfrei wieder ablösbar und daher geringe Klebkräfte aufweisen soll. Typische Werte der Klebkraft von derartigen Bändern liegen im Bereich von 1 bis 5 N/cm. Bei dem bekannten Klebeband handelt es sich nicht um ein Klebeband der eingangs genannten Art, insofern es sich bei der verwendeten Klebstoff-Zusammensetzung zwar - wie explizit ausgeführt - um eine aus Monomeren fotopolymerisierte Masse, jedoch nicht um vernetzte Acrylate handelt.

In den Dokumenten DE 39 35 097 A1 und DE 42 11 448 A1 sind - im Gegensatz zu dem vorstehend genannten Dokument - keine Klebebänder, sondern reine "Haftklebeschichten" bzw. "Haftklebematerialien" beschrieben. Es handelt sich dabei lediglich um - offenbar zu Forschungszwecken - hergestellte Labormuster, an denen der Einsatz eines Lasers zur Polymerisation getestet wird. Die Klebkraft der Haftklebematerialien wird für ein 100 μm dickes Muster in einem Beispiel mit 12,6 N / 1,4 cm angegeben. Bei dickeren Beschichtungen werden nur noch Klebkräfte von unter 5 N/cm erreicht.

Der vorliegenden Erfindung liegt die Aufgabe zugrunde, ein technisches Klebeband der eingangs genannten Art sowie ein entsprechendes Herstellungsverfahren zu schaffen, wobei sich das Klebeband bei wenig aufwändiger Herstellungsweise vorzugsweise für den Einsatz im Baubereich eignen und eine gute Haftung auf rauhen Untergründen aufweisen soll.

Diese Aufgabe wird mit einem Klebeband bzw. einem Verfahren zur Herstellung eines Klebebandes der eingangs genannten Art gelöst, bei dem die Klebebeschichtung ein Auftragsgewicht von 160 - 250 g/m² aufweist und derart aufgetragen und vernetzt ist, dass das Klebeband eine Anfangshaftung nach FTM 9 auf Stahl von mindestens 8 N/cm, eine Klebkraft nach DIN EN 1939 auf Stahl von mindestens 10 N/cm und eine Scherfestigkeit nach FTM 8 (100 mm², 0,5 kg) von mindestens 15 min aufweist.

Durch die Erfindung gelingt es vorteilhafterweise, einen sich in der Klebebeschichtung ausbildenden Vernetzungsgradienten derart zu minimieren, dass das erfindungsgemäße Klebeband bei hoher Dicke der Klebebeschichtung eine ausgezeichnete Kohäsion und eine sehr gute Haftung auf rauhen Untergründen aufweist.

In bevorzugter Ausführung kann dabei die Klebebeschichtung mit einem Auftragsgewicht von 160 - 220 g/m² aufgetragen werden, und es kann eine Anfangshaftung nach FTM 9 auf Stahl von mindestens 10 N/cm, eine Klebkraft nach DIN EN 1939 auf Stahl von mindestens 15 N/cm und/oder eine Scherfestigkeit nach FTM 8 (100 mm², 0,5 kg) von mindestens 30 min vorliegen.

Durch die erfindungsgemäße Auftragung und Vernetzung, die durch das Auftragsverfahren für die Beschichtung, insbesondere den Einsatz eines Transferverfahrens, bevorzugt in Verbindung mit einer speziellen UV-Lampenauswahl und einem abgestimmten Verhältnis einer Bahngeschwindigkeit des beschichteten Trägers zur eingestrahlten UV-Leistung bestimmt ist, ist es überraschenderweise gelungen, entgegen der bisher veröffentlichten Fachmeinung, ein Klebeband herzustellen, dass die eingangs erwähnten Nachteile des bekannten Standes der Technik überwindet.

Als Trägermaterial des erfindungsgemäßen Klebebandes können mit Vorteil handelsübliche Papiere, Folien oder Textilien zum Einsatz kommen. Papiere können dabei vorzugsweise durch eine PE-Kaschierung oder eine Wachsschicht wasserabweisend ausgerüstet sein, während PE- oder PP-Folien zur Verbesserung der Zugfestigkeit vorzugsweise mit einem Gelege verstärkt werden können. Als Trägertextilien können vorzugsweise Gewebe oder Vliese aus Polyester oder Polyolefinen verwendet werden. Bei Vliesstoffen unterscheidet man dabei Spinnvliese aus Endlosfilamenten und Spinnfaservliese aus Stapelfasern definierter Länge, die gleichermaßen geeignet sind. Die Vliese können mit unterschiedlichen Methoden wie Nähen, Nadeln, Prägen oder mit Hilfe eines Wasserstahls verfestigt sein.

Durch die für die Klebebeschichtung verwendeten Klebrohstoffe auf der Basis von Polyacrylaten, vorzugsweise von Hotmet-Acrylaten, kann eine hohe Alterungs- und Feuchtigkeitsstabilität gewährleistet werden. Beispielsweise können handelsübliche Rohstoffe der Produktreihen AcResin der Fa. BASF eingesetzt werden. Es handelt sich dabei um UV-vernetzbare Acrylate, die erfindungsgemäß mit 0,1 - 1,0 % eines zusätzlichen Fotoinitiators, der eine wirksame UV-Absorption im Wellenlängenbereich 300 - 400 nm aufweist, mit 0 -15 % eines Reaktivverdünners, mit 0 - 20 % Füllstoffen und/oder Flammschutzmitteln abgemischt werden können. Ein solcher Rohstoff bzw. eine solche Mischung besitzt bei Verarbeitungstemperatur auch die notwendige Viskosität, um mit einem Flächengewicht von 120 - 250, vorzugsweise 160 - 220 g/m², aufgetragen werden zu können.

Der Rohstoff wird erfindungsgemäß bevorzugt nicht direkt auf den Träger aufgebracht, sondern zunächst auf einen silikonisierten Zwischenträger. Hierzu dienen vorzugsweise ein- oder doppelseitig silikonisierte Papiere oder temperaturstabile Folien. Alternativ kann die Beschichtung aber auch auf eine silikonisierte Trägeroberseite mit einem auf die UV-Bestrahlung folgenden Transfer auf die Trägerunterseite erfolgen.

Durch die Beschichtung eines Zwischenträgers oder der Trägeroberseite und die darauf erfolgende Bestrahlung des Klebrohstoffs mit dem anschließenden Transfer gelangt die stärker vernetzte und weniger klebrige Seite der Klebebeschichtung auf die dem Trägermaterial zugewandte Seite, was die Ausbildung der erfindungsgemäßen Werte der Anfangshaftung, der Klebkraft und der Scherfestigkeit begünstigt.

Die Beschichtungsmasse erhält durch die Vernetzung mittels UV-Strahlung ihre erfindungsgemäßen haftklebrigen Eigenschaften. Um eine möglichst hohe Tiefenwirkung der Bestrahlung zu erzielen, kann es erfindungsgemäß bevorzugt vorgesehen sein, daß zumindest ein Teil der eingesetzten UV-Lampen nicht reine Quecksilber-Mitteldruckstrahler sind, sondern daß zusätzlich oder alternativ vorzugsweise mit Eisen, Blei oder Gallium dotierte Strahler zum Einsatz kommen.

Um eine gute Beweglichkeit der Moleküle des Klebrohstoffs zu erhalten, sollte die Beschichtungsmasse bei der Bestrahlung nicht kalt sein. Günstiger ist es, die noch heiße Masse oder eine aufgeheizte Masse zu bestrahlen, die, z.B. über eine Heizwalze, auf eine über der Raumtemperatur liegende Temperatur, vorzugsweise auf eine Temperatur von mehr als 100°C, gebracht werden kann.

Durch eine Kaschierung des beschichteten Zwischenträgers mit dem eigentlichen Trägermaterial kann der Klebstoff auf dieses übertragen werden. Eine mögliche Gelege- oder Gewebeverstärkung kann in technologisch vorteilhafter Weise bei der Kaschierung mit einlaufen. Durch die Silikonisierung des Zwischenträgers ist dabei eine anschließende Ablösung desselben von dem nun mit Klebstoff versehenen Trägermaterial problemlos möglich.

Eine beschichtete Mutterrolle großer Breite kann abschließend über einen Rollenschneider zu handelsüblichen Schmalrollen konfektioniert werden.

Weitere vorteilhafte Ausführungen der Erfindung sind in den Unteransprüchen und der nachfolgenden speziellen Beschreibung enthalten. Anhand dreier Ausführungsbeispiele wird dabei die Erfindung näher erläutert, wobei in der beigefügten Zeichnung zeigen:

Fig. 1     einen Querschnitt durch ein erfindungsgemäßes technisches Klebeband in einer ersten Ausführung (Beispiel 1),

Fig. 2     einen Querschnitt durch ein technisches Klebeband in einer Ausführung (Beispiel 2), die eine geringere als die erfindungsgemäß vorgesehene spezifische Flächenmasse aufweist,

Fig. 3     einen Querschnitt durch ein technisches Klebeband in einer weiteren Ausführung (Beispiel 3), die ebenfalls eine geringere als die erfindungsgemäß vorgesehene spezifische Flächenmasse aufweist.

Beispiel 1

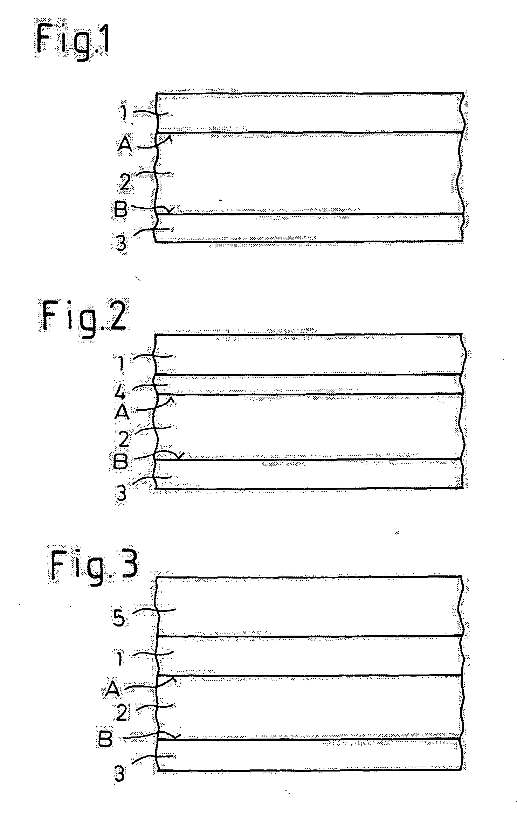

Ein doppelseitig silikonisiertes Kraftpapier mit einem Flächengewicht von 65 g/m$^2$ wird mit einer Beschichtung von 180 g/m$^2$ AcResin 3552 der Fa. BASF versehen. Der Rohstoff wird ohne vorherige Abkühlung bei einer Temperatur von etwa 130 °C mit einer aus drei mit Gallium dotierten und vier undotierten Quecksilberstrahlem bestehenden UV-Einheit vernetzt. Die Durchlaufgeschwindigkeit v beträgt 30 m/min, die UV-Dosis 200 mJ/cm$^2$. Die beschichtete Bahn wird abgekühlt und mit einem handelsüblichen PEbeschichteten Papier mit

einem Flächengewicht von 120 g/m$^2$ kaschiert. Dieses Papier dient als Träger 1 des erfindungsgemäßen Klebebandes für die Klebebeschichtung 2, auf der das Kraftpapier als Liner 3 verbleibt, wie dies Fig. 1 zeigt.

In Fig. 1 ist auch dargestellt, dass die Klebebeschichtung 2 eine stärker vernetzte Seite A und eine weniger stark vernetzte Seite B aufweist, wobei die stärker vernetzte Seite A dem Träger 1 zugewandt ist. Der fertige Verbund wird aufgewickelt und anschließend, in einem weiteren Fertigungsschritt, mit einem Rollenschneider in verkaufsfähige Schmalrollen konfektioniert.

Das erfindungsgemäße Klebeband hat eine Klebkraft nach DIN 1939 von 17 N/cm auf Stahl, eine Anfangshaftung nach FTM 9 auf Stahl von 12 N/cm und eine ausgezeichnet Haftung auf Untergründen wie sägerauhem Holz oder handelsüblichen Dachunterspannbahnen. Durch die Vernetzung wird eine Scherfestigkeit nach FTM 8 (100 mm$^2$, 0,5 kg) von 30 - 60 min erreicht. Diese ist für die beschriebene Anwendung ausreichend, allerdings besitzen die Rollen auf Grund eines noch vorhandenen Kaltflusses der Klebebeschichtung 2 eine eingeschränkte Lagerstabilität.

Beispiel 2 (vergleich)

Ein doppelseitig silikonisiertes Glassinepapier mit einem Flächengewicht von 90 g/m$^2$ wird mit 150 g/m$^2$ einer Mischung aus 90 % AcResin 258 der Fa. BASF, 5 % Laromer PO 43F der Fa. BASF als Reaktivverdünner, 4,5 % Exolit 5087 der Fa. Clariant als Flammschutzmittel und 0,5 % Irgacure 184 der Fa. Ciba als zusätzlicher Fotoinitiator beschichtet.

Die Mischung wird mit einer aus drei mit Eisen dotierten und vier undotierten Quecksilberstrahlem bestehenden UV-Einheit vernetzt. Die Durchlaufgeschwindigkeit v beträgt 20 m/min, die UV-Dosis 300 mJ/cm$^2$. Die beschichtete Bahn wird anschließend abgekühlt und mit einer handelsüblichen PE-Folie der Stärke 80 $\mu$m kaschiert. Diese Folie dient als Träger 1 des erfindungsgemäßen Klebebandes für die Klebebeschichtung 2, auf der das Glassinepapier als Liner 3 verbleibt, wie dies Fig. 2 zeigt. Bei der Kaschierung wird als zusätzliche Verstärkung 4 ein handelsübliches Gittergelege (z.B. der Fa. Chavanoz) mit einkaschiert.

Der fertige Verbund wird aufgewickelt und anschließend, in einem weiteren Fertigungsschritt, mit einem Rollenschneider in verkaufsfähige Schmalrollen konfektioniert.

Das Klebeband hat eine Klebkraft nach DIN 1939 von 16 N/cm auf Stahl, eine Scherfestigkeit nach FTM 8 (100 mm$^2$, 0,5 kg) von 40-100 min, eine Anfangshaftung nach FTM 9 auf Stahl von 10 N/cm und eine ausgezeichnete Haftung auf Untergründen wie sägerauhem Holz oder handelsüblichen Dachunterspannbahnen.

Das Klebeband besitzt zudem eine ausgezeichnete Wasserbeständigkeit. Auch nach 60 Minuten zeigt sich im Eintauchversuch keinerlei Reemulgation des Klebstoffs. Das Band erfüllt mit einer Breite von 50 - 70 mm, in Verbindung mit einer Dachunterspannbahn der Brandklasse B2 die Anforderungen nach DIN 4102 für die Brandklasse B2.

Beispiel 3 (vergleich)

Auf ein doppelseitig silikonisiertes, einen Liner 3 bildendes Kraftpapier mit einem Flächengewicht von 65 g/m$^2$ wird eine Beschichtung von 150 g/m$^2$ einer Mischung aus 96 % AcResin 3552 der Fa. BASF, 3,8 % Laromer PO 43F der Fa. BASF und 0,2 % Irgacure 651 der Fa. Ciba aufgebracht.

Die Beschichtung wird mit einer aus drei mit Gallium dotierten und vier undotierten Quecksilberstrahlem bestehenden UV-Einheit vernetzt. Die Durchlaufgeschwindigkeit v beträgt 30 m/min, die UV-Dosis 180 mJ/cm$^2$. Die beschichtete Bahn wird anschließend abgekühlt und mit einem handelsüblichen wasserstrahlverfestigten, den Träger 1 für die Klebebeschichtung 2 bildenden PET-Spinnvlies, welches ein Flächengewicht von 60 g/m$^2$ aufweist, kaschiert. Der Verbund wird aufgewickelt.

In einem zweiten Beschichtungsvorgang wird anschließend die zweite Seite des im Verbund enthaltenen Silikonpapiers erneut mit 150 g/m$^2$ der Klebstoffmischung beschichtet. Die Vernetzung erfolgt wiederum mit einer aus drei mit Gallium dotierten und vier undotierten Quecksilberstrahlem bestehenden UV-Einheit mit einer Durchlaufgeschwindigkeit v von 30 m/min und einer UV-Dosis von 180 mJ/cm$^2$. Die beschichtete Bahn wird anschließend abgekühlt und auf sich selbst gewickelt. Dabei erfolgt der Transfer der zweiten Klebebeschichtung 5 auf den Träger 1.

Fig. 3 ist der Aufbau des aus dem Träger 1, der ersten Klebebeschichtung 2, dem Liner 3 und der zweiten Klebebeschichtung 5 bestehenden erfindungsgemäßen Klebebandes zu entnehmen.

In einem abschließenden Fertigungsschritt werden wiederum mit einem Rollenschneider verkaufsfähige Schmalrollen geschnitten.

Das so hergestellte, doppelseitige Vliesklebeband hat eine Klebkraft nach DIN 1939 von 15 N/cm auf Stahl, eine Anfangshaftung nach FTM 9 auf Stahl von 10 N/cm, eine Scherfestigkeit nach FTM 8 (100 mm$^2$, 0,5 kg) von mehr 60 min und eine ausgezeichnete Haftung auf Untergründen wie sägerauhem Holz oder handelsüblichen Dachunterspannbahnen.

Das Band besitzt zudem eine hohe Flexibilität und paßt sich dadurch hervorragend diffusionsoffenen Unterspannbahnen aus Vliesstoffen an.

Die vorstehend beschriebenen Angaben beziehen sich auf Messungen, die mit einem Strahlungsmeßgerät der Fa. UV-Technik, Ortenberg mit einem UV-C-empfindlichen Sensor erfolgten. Die Bestimmung der auf das Produkt einwirkenden UV-Dosis erfolgte unter Berücksichtigung der Maschinengeschwindigkeit beim Transport der Bahn des Bandes und der Verteilung der Lampenintensität in Bahnrichtung nach der Formel

$$D = ( I * S ) / (1{,}67 * v)$$

wobei D - die UV-Dosis in mJ/cm$^2$, S - eine ausgeleuchtete Strecke der zu vernetzenden Beschichtung, I - eine mittlere Strahlungsintensität in einem von den eingesetzten UV-Strahlem ausgeleuchteten Bereich in W/cm$^2$, und v - die Bahngeschwindigkeit (Durchlaufgeschwindigkeit) der auf den Träger 1 aufgebrachten, zur Venetzung bestimmten Klebebeschichtung 2 in m/min ist.

Die Erfindung beschränkt sich nicht auf das erste der beschriebenen Ausführungsbeispiele, sondern umfasst auch alle im Sinne der Erfindung gleichwirkenden Ausführungen. So kann es sich - wie bereits erwähnt - bei dem Trägermaterial um einen Träger 1 handeln, bei dem das spezifische Flächengewicht 50 - 180 g/m$^2$, vorzugsweise 65 - 100 g/m$^2$, beträgt. Bei Auftragung eines höheren spezifischen Flächengewichtes der Klebebeschichtung 2 und einer technologischen Behandlung gemäß den Beispielen 2 und 3 sind ähnliche , im erfindungsgemäß beanspruchten Bereich liegende Werte der Klebkraft und der Scherfestigkeit erzielbar.

Des weiteren kann der Fachmann die Erfindung durch zusätzliche vorteilhafte Maßnahmen ergänzen, ohne dass der Rahmen der Erfindung verlassen wird. So kann im Falle eines doppelseitigen Klebebandes die Klebebeschichtung auf einer der beiden Seiten auch in herkömmlicher Weise aufgebracht werden, ohne dass der Rahmen der Erfindung verlassen wird. Die Bahngeschwindigkeit v des Trägers 1 mit der zur Vernetzung bestimmten Klebebeschichtung 2 kann variieren. Insbesondere kann sie in einem Bereich von 10-50 m/min, oder - wie schon aus den Beispielen hervorgeht - bevorzugt in einem Bereich von 20-30 m/min liegen.

Bezugszeichen

| 1 | Träger |
| 2 | (erste) Klebebeschichtung |
| 3 | Liner |
| 4 | Verstärkung |
| 5 | (zweite) Klebebeschichtung |
| A | stärker vernetzte Seite von 2 |
| B | weniger stark vernetzte Seite von 2 |

**Patentansprüche**

1.    Technisches Klebeband, insbesondere für den Einsatz im Bauwesen, mit einem bandförmigen Träger (1) und mit einer zumindest auf einer Seite aufgetragenen druckempfindlichen Klebebeschichtung (2, 5), die aus einem UV-vernetzten Haftklebstoff auf Acrylatbasis besteht und ein spezifisches Flächengewicht von mindestens 100 g/m$^2$ aufweist, **dadurch gekennzeichnet, dass** die Klebebeschichtung (2, 5) ein Auftragsgewicht von 160 - 250 g/m$^2$ aufweist und derart aufgetragen und vernetzt ist, dass das Klebeband eine Anfangshaftung nach FTM 9 auf Stahl von mindestens 8 N/cm, eine Klebkraft nach DIN EN 1939 auf Stahl von mindestens 10 N/cm und eine Scherfestigkeit nach FTM 8 (100 mm$^2$, 0,5 kg) von mindestens 15 min aufweist.

2. Klebeband nach Anspruch 1,
   **gekennzeichnet durch** eine Anfangshaftung nach FTM 9 auf Stahl von mindestens 10 N/cm, eine Klebkraft nach DIN EN 1939 auf Stahl von mindestens 15 N/cm und/oder eine Scherfestigkeit nach FTM 8 (100 mm$^2$, 0,5 kg) von mindestens 30 min.

3. Klebeband nach Anspruch 1 oder 2,
   **dadurch gekennzeichnet , daß** sich der Haftklebstoff aus einem oder mehreren UV-vernetzbaren Acrylat(en), unter Zusatz von 0 - 1 %, vorzugsweise 0 - 0,5 %, eines Fotoinitiators, 0 - 20 %, vorzugsweise 0 - 10 %, eines Reaktivverdünners, 0 - 20%, vorzugsweise 0 - 10 %, eines Füllstoffs und/oder 0 - 20 %, vorzugsweise 0 - 10 %, eines Flammschutzmittels zusammensetzt.

4. Klebeband nach einem der Ansprüche 1 bis 3,
   **dadurch gekennzeichnet, daß** der Träger (1) aus einer Folie aus PE, PP oder aus einer Mischung aus PE und PP besteht.

5. Klebeband nach einem der Ansprüche 1 bis 3,
   **dadurch gekennzeichnet, daß** der Träger (1) aus einem Papier oder einem mit Wachs oder PE beschichteten Papier besteht.

6. Klebeband nach einem der Ansprüche 1 bis 3,
   **dadurch gekennzeichnet, daß** der Träger (1) aus einem Gewebe oder Vlies aus PP, PET oder einer Mischung aus PE oder PET besteht.

7. Klebeband nach einem der Ansprüche 1 bis 6,
   **dadurch gekennzeichnet, daß** das spezifische Flächengewicht des Trägers (1) 50 - 180 g/m$^2$, vorzugsweise 65 - 100 g/m$^2$, beträgt.

8. Klebeband nach einem der Ansprüche 1 bis 7,
   **dadurch gekennzeichnet, daß** der Träger (1) auf derBandoberseite silikonisiert ist.

9. Klebeband nach einem der Ansprüche 1 bis 8,
   **dadurch gekennzeichnet, daß** zwischen dem Träger (1) und der Klebebeschichtung (2) eine, insbesondere einkaschierte, zusätzliche Verstärkung (4), insbesondere in Form eines Gewebes oder eines Geleges, angeordnet ist.

10. Klebeband nach einem der Ansprüche 1 bis 9,
    **dadurch gekennzeichnet, daß** die Klebebeschichtung (2) eine stärker vernetzte Seite (A) und eine weniger stark vernetzte Seite (B) aufweist, wobei die stärker vernetzte Seite (A) dem Träger (1) zugewandt ist.

11. Klebeband nach einem der Ansprüche 1 bis 10,
    **dadurch gekennzeichnet, daß** die Klebebeschichtung (2, 5) mit einem Auftragsgewicht von 160 - 220 g/m$^2$ aufgetragen ist.

12. Klebeband nach einem der Ansprüche 1 bis 11,
    **dadurch gekennzeichnet, daß** die Klebebeschichtung (2) mit einem ein- oder beidseitig silikonisierten Liner (3) abgedeckt ist.

13. Verfahren zur Herstellung eines technischen Klebebandes, insbesondere eines Klebebardes nach einem der Ansprüche 1 bis 12, wobei auf einen bandförmigen Träger (1) zumindest auf einer Seite eine druckempfindliche Klebebeschichtung (2, 5) aufgetragen wird, die aus einem UV-vernetzten Haftklebstoff auf Acrylathasis besteht und ein spezifisches Flächengewicht von mindestens 100 g/m$^2$ aufweist, **dadurch gekennzeichnet, dass** die Klebebeschichtung (2) mit einem Auftragsgewicht von 160 - 260 g/m$^2$ derart aufgetragen und vernetzt wird, dass das Klebeband eine Anfangshaftung nach FTM 9 auf Stahl von mindestens 8 N/cm, eine Klebkraft nach DIN EN 1939 auf Stahl von mindestens 10 N/cm und eine Scherfestigkeit nach FTM 8 (100 mm$^2$, 0,5 kg) von mindestens 15 min aufweist.

14. Verfahren nach Anspruch 13,
    **dadurch gekennzeichnet, daß** der für die Klebebeschichtung (2) eingesetzte Klebrohstoff zunächst auf einen silikonisierten Liner (3) aufgebracht wird, dort vernetzt und anschließend durch Kaschierung auf den Träger (1) übertragen wird.

15. Verfahren nach Anspruch 13,
    **dadurch gekennzeichnet, daß** die Klebebeschichtung (2) zunächst auf die silikonisierte Seite eines einseitig silikonisierten Trägers (1) aufgebracht wird, dort vernetzt und anschließend durch Wicklung auf sich selbst auf die andere nicht silikonisierte Seite des Trägers (1) übertragen wird.

16. Verfahren nach einem der Ansprüche 13 bis 15,
    **dadurch gekennzeichnet, daß** der für die Klebeschichtung (2) eingesetzte Klebrohstoff mit einer UV-Dosis von 120 bis 350 mJ/cm$^2$, vorzugsweise von 150 bis 300 mJ/cm$^2$, vernetzt wird.

17. Verfahren nach einem der Ansprüche 13 bis 16,

dadurch gekennzeichnet, daß der Wert der auf das Produkt einwirkenden UV-Dosis nach der Formel

$$D = (\, I * S\,) \,/\, (1{,}67 * v)$$

bestimmt wird, wobei D - die UV-Dosis in mJ/cm$^2$, S - eine ausgeleuchtete Strecke der zu vernetzenden Beschichtung, I - eine mittlere Strahlungsintensität im von zur Bestrahlung eingesetzten UV-Strahlern ausgeleuchteten Bereich in W/cm$^2$, und v - eine Bahngeschwindigkeit des Trägers (1) mit der zur Vernetzung bestimmten Klebebeschichtung (2) in m/min ist.

18. Verfahren nach einem der Ansprüche 13 bis 17, **gekennzeichnet durch** eine Bahngeschwindigkeit (v) des Trägers (1) mit der zur Vernetzung bestimmten Klebebeschichtung (2) von 10-50 m/min, insbesondere von 20 -30 m/min, bei der UV-Vernetzung.

19. Verfahren nach einem der Ansprüche 13 bis 18, **dadurch gekennzeichnet, daß** zur UV-Vernetzung des für die Klebebeschichtung (2) eingesetzten Klebrohstoffs neben oder alternativ zu Quecksilber-Mitteldruckstrahlern mit Gallium, Blei oder Eisen dotierte Lampen eingesetzt werden.

20. Verfahren nach einem der Ansprüche 13 bis 19, **dadurch gekennzeichnet, daß** die Klebebeschichtung (2) vor oder bei der UV-Vernetzung, insbesondere über Heizwalzen, auf eine(r) oberhalb der Raumtemperatur liegende(n) Temperatur, vorzugsweise auf eine(r) Temperatur von mehr als 100°C, gebracht und/oder gehalten wird.

21. Verfahren nach einem der Ansprüche 14 bis 20, **dadurch gekennzeichnet, daß** bei der Übertragung der Klebebeschichtung (2) auf den Träger (1) zwischen den Träger (1) und die Klebebeschichtung (2) eine zusätzliche Verstärkung (4), insbesondere in Form eines Gewebes oder eines Geleges, eingebracht, insbesondere einkaschiert, wird.

22. Verwendung eines technischen Klebebandes nach einem der Ansprüche 1 bis 12 für Abdichtungs- oder Isolationszwecke.

23. Verwendung nach Anspruch 22, **gekennzeichnet durch** den Einsatz des Klebebandes zur Befestigung von Unterspannbahnen, Dampfbremsen, diffusionsoffenen Folien und/oder Vliesen im Hoch- und Tiefbau.

**Claims**

1. An industrial adhesive tape, in particular for use in the construction industry, with a base (1) in the form of a tape and with a pressure-sensitive adhesive coating (2, 5) which is applied on at least one side and which consists of an acrylate-based UV-cross-linked pressure-sensitive adhesive and which has a specific weight per unit of area of at least 100 g/m$^2$, **characterized in that** the adhesive coating (2, 5) has an application weight of from 160 to 250 g/m$^2$ and is applied and cross-linked in such a way that the adhesive tape has an initial adhesion in accordance with FTM 9 on steel of at least 8 N/cm, an adhesive force in accordance with DIN EN 1939 on steel of at least 10 N/cm and a shear strength in accordance with FTM 8 (100 mm$^2$, 0-5 kg) of at least 15 min.

2. An adhesive tape according to Claim 1, **characterized by** an initial adhesion in accordance with FTM 9 on steel of at least 10 N/cm, an adhesive force in accordance with DIN EN 1939 on steel of at least 15 N/cm and/or a shear strength in accordance with FTM 8 (100 mm$^2$, 0·5 kg) of at least 30 min.

3. An adhesive tape according to Claim 1 or 2, **characterized in that** the pressure-sensitive adhesive is formed from one or more acrylates capable of being UV-cross-linked, with the addition of from 0 to 1 %, preferably from 0 to 0-5 %, of a photo-initiator, from 0 to 20 %, preferably from 0 to 10 %, of a reactive diluent, from 0 to 20 %, preferably from 0 to 10 % of a filler and/or from 0 to 20 %, preferably from 0 to 10 %, of a flame retardant.

4. An adhesive tape according to any one of Claims 1 to 3, **characterized in that** the base (1) consists of a foil of PE, of PP or of a mixture of PE and PP.

5. An adhesive tape according to any one of Claims 1 to 3, **characterized in that** the base (1) consists of a paper or a paper coated with wax or PE.

6. An adhesive tape according to any one of Claims 1 to 3, **characterized in that** the base (1) consists of a fabric or a non-woven material of PP, PET or a mixture of PE or PET.

7. An adhesive tape according to any one of Claims 1 to 6, **characterized in that** the specific weight per unit of area of the base (1) amounts to from 50 to 180 g/m$^2$, preferably from 65 to 100 g/m$^2$.

8. An adhesive tape according to any one of Claims 1 to 7, **characterized in that** the base (1) is siliconized onto the top side of the tape.

**9.** An adhesive tape according to any one of Claims 1 to 8, **characterized in that** an additional reinforcement (4), in particular laminated in and in particular in the form of a fabric or a deposit, is arranged between the base (1) and the adhesive coating (2).

**10.** An adhesive tape according to any one of Claims 1 to 9, **characterized in that** the adhesive coating (2) has a more strongly cross-linked side (A) and a less strongly cross-linked side (B), wherein the more strongly cross-linked side (A) faces towards the base (1).

**11.** An adhesive tape according to any one of Claims 1 to 10, **characterized in that** the adhesive coating (2, 5) is applied with an application weight of from 160 to 220 g/m$^2$.

**12.** An adhesive tape according to any one of Claims 1 to 11, **characterized in that** the adhesive coating (2) is covered with a liner (3) siliconized on one or both sides.

**13.** A method of producing an industrial adhesive tape, in particular an adhesive tape according to any one of Claims 1 to 12, wherein a pressure-sensitive adhesive coating (2, 5), which consists of an acrylate-based UV cross-linked pressure-sensitive adhesive and which has a specific weight *per* unit of area of at least 100 g/m$^2$, is applied to a base (1) in the form of a tape on at least one side, **characterized in that** the adhesive coating (2) with an application weight of from 160 to 250 g/m$^2$ is applied and cross-linked in such a way that the adhesive tape has an initial adhesion in accordance with FTM 9 on steel of at least 8 N/cm, an adhesive force in accordance with DIN EN 1939 on steel of at least 10 N/cm and a shear strength in accordance with FTM 8 (100 mm$^2$, 0-5 kg) of at least 15 min.

**14.** A method according to Claim 13, **characterized in that** the adhesive raw material used for the adhesive coating (2) is first applied to a siliconized liner (3), is cross-linked there and is then transferred by laminating to the base (1).

**15.** A method according to Claim 13, **characterized in that** the adhesive coating (2) is first applied to the siliconized side of a base (1) siliconized on one side, is cross-linked there and is then transferred by winding onto itself to the other, non-siliconized side of the base (1).

**16.** A method according to any one of Claims 13 to 15, **characterized in that** the adhesive raw material used for the adhesive coating (2) is cross-linked with an UV dose of from 120 to 350 mJ/cm$^2$, preferably from 150 to 300 mJ/cm$^2$.

**17.** A method according to any one of Claims 13 to 16, **characterized in that** the value of the UV dose acting upon the product is determined in accordance with the formula

$$D = (I * S) / (1{\cdot}67 * v)$$

in which D is the UV dose in mJ/cm$^2$, S is an illuminated length of the coating to be cross-linked, I is an average radiation intensity in the region illuminated by UV radiation means used for radiation in W/cm$^2$, and **v** is a path speed of the base (1) with the adhesive coating (2) intended for cross-linking in m/min.

**18.** A method according to any one of Claims 13 to 17, **characterized by** a path speed (v) of the base (1) with the adhesive coating (2) intended for cross-linking of from 10 to 50 m/min, in particular from 20 to 30 m/min, in the UV cross-linking.

**19.** A method according to any one of Claims 13 to 18, **characterized in that** lamps doped with gallium, lead or iron are used in addition or as an alternative to mercury medium-pressure radiation means for the UV cross-linking of the adhesive raw material used for the adhesive coating (2).

**20.** A method according to any one of Claims 13 to 19, **characterized in that** the adhesive coating (2) is brought to and/or is kept at a temperature above room temperature, preferably a temperature of more than 100°C, before or during the UV cross-linking, in particular by way of heating rollers.

**21.** A method according to any one of Claims 14 to 20, **characterized in that** during the transfer of the adhesive coating (2) to the base (1) an additional reinforcement (4), in particular in the form of a fabric or a deposit, is attached, and in particular laminated in, between the base (1) and the adhesive coating (2).

**22.** Use of an industrial adhesive tape according to any one of Claims 1 to 12 for sealing or insulation purposes.

**23.** Use according to Claim 22, **characterized by** the use of the adhesive tape for fastening sarking felts, vapour barriers, films open to diffusion and/or non-woven materials in construction above and below the ground.

**Revendications**

**1.** Ruban adhésif technique, en particulier destiné à être utilisé dans le bâtiment, ce ruban comprenant un support en forme de bande (1) et, déposé au moins sur une face, un revêtement adhésif sensible à la pression (2, 5) qui se compose d'un adhésif à base d'acrylate réticulé aux UV et qui présente un grammage spécifique au moins égal à 100 g/m$^2$, **caractérisé en ce que** le revêtement adhésif (2, 5) présente un poids de dépôt de 160 à 250 g/m$^2$ et **en ce qu'**il est déposé et réticulé de telle façon que le ruban adhésif présente une adhérence initiale suivant FTM 9 sur l'acier d'au moins 8 N/cm, un pouvoir adhésif suivant DIN EN 1939 sur l'acier d'au moins 10 N/cm et une tenue au cisaillement suivant FTM 8 (100 mm$^2$, 0,5 kg) d'au moins 15 minutes.

2. Ruban adhésif selon la revendication 1, **caractérisé par** une adhérence initiale suivant FTM 9 sur l'acier d'au moins 10 N/cm, un pouvoir adhésif suivant DIN EN 1939 sur l'acier d'au moins 15 N/cm et/ou une tenue au cisaillement suivant FTM 8 (100 mm$^2$, 0,5 kg) d'au moins 30 minutes.

3. Ruban adhésif selon la revendication 1 ou la revendication 2, **caractérisé en ce que** l'adhésif se compose d'un ou plusieurs acrylates réticulables aux UV additionnés de 0 à 1%, de préférence de 0 à 0,5% d'un photoamorceur, de 0 à 20%, de préférence de 0 à 10% d'un diluant réactif, de 0 à 20%, de préférence de 0 à 10% d'une matière de charge et/ou de 0 à 20%, de préférence de 0 à 10% d'un agent ignifugeant.

4. Ruban adhésif selon l'une des revendications 1 à 3, **caractérisé en ce que** le support (1) est constitué d'une feuille de PE, de PP ou d'un mélange de PE et de PP.

5. Ruban adhésif selon l'une des revendications 1 à 3, **caractérisé en ce que** le support (1) est constitué de papier ou d'un papier revêtu de cire ou de PE.

6. Ruban adhésif selon l'une des revendications 1 à 3, **caractérisé en ce que** le support (1) est constitué d'un tissu ou d'un non-tissé de PP, de PET ou d'un mélange de PE ou de PET.

7. Ruban adhésif selon l'une des revendications 1 à 6, **caractérisé en ce que** le grammage spécifique du support (1) se situe dans la plage de 50 à 180 g/m$^2$, de préférence de 65 à 100 g/m$^2$.

8. Ruban adhésif selon l'une des revendications 1 à 7, **caractérisé en ce que** le support (1) est siliconé sur la face supérieure de la bande.

9. Ruban adhésif selon l'une des revendications 1 à 8, **caractérisé en ce qu'**un renfort supplémentaire (4), en particulier inséré par placage, notamment sous la forme d'un tissu ou d'un non-tissé, est disposé entre le support (1) et le revêtement adhésif (2).

10. Ruban adhésif selon l'une des revendications 1 à 9, **caractérisé en ce que** le revêtement adhésif (2) présente une face plus fortement réticulée (A) et une face moins fortement réticulée (B), la face plus fortement réticulée (A) étant dirigée vers le support (1).

11. Ruban adhésif selon l'une des revendications 1 à 10, **caractérisé en ce que** le revêtement adhésif (2, 5) est déposé à un poids de dépôt allant de 160 à 220 g/m$^2$.

12. Ruban adhésif selon l'une des revendications 1 à 11, **caractérisé en ce que** le revêtement adhésif (2) est recouvert d'un côté ou des deux côtés par une pellicule détachable siliconée (3).

13. Procédé de fabrication d'un ruban adhésif technique, en particulier d'un ruban adhésif selon l'une des revendications 1 à 12, dans lequel on dépose au moins sur une face d'un support en forme de bande (1) un revêtement adhésif sensible à la pression (2, 5) qui se compose d'un adhésif à base d'acrylate réticulé aux UV et qui présente un grammage spécifique d'au moins 100 g/m$^2$, **caractérisé en ce que** le revêtement adhésif (2) est déposé à un poids de dépôt de 160 à 250 g/m$^2$ et réticulé de telle façon que le ruban adhésif présente une adhérence initiale suivant FTM 9 sur l'acier d'au moins 8 N/cm, un pouvoir adhésif suivant DIN EN 1939 sur l'acier d'au moins 10 N/cm et une tenue au cisaillement suivant FTM 8 (100 mm$^2$, 0,5 kg) d'au moins 15 minutes.

14. Procédé selon la revendication 13, **caractérisé en ce que** la matière première adhésive utilisée pour le revêtement adhésif (2) est d'abord déposée sur une pellicule détachable siliconée (3) puis réticulée sur celle-ci et ensuite transférée par placage sur le support (1).

15. Procédé selon la revendication 13, **caractérisé en ce que** le revêtement adhésif (2) est d'abord déposé sur la face siliconée d'un support (1) siliconé sur une seule face puis réticulée sur celle-ci et ensuite transférée sur l'autre face non siliconée du support (1) en enroulant ce dernier sur lui-même.

16. Procédé selon l'une des revendications 13 à 15, **caractérisé en ce que** la matière première adhésive utilisée pour le revêtement adhésif (2) est réticulée en utilisant une dose d'UV allant de 120 à 350 mJ/cm$^2$, de préférence de 150 à 300 mJ/cm$^2$.

17. Procédé selon l'une des revendications 13 à 16, **caractérisé en ce que** la valeur de la dose d'UV qui agit sur le produit est déterminée au moyen de la formule

$$D = (I * S) / (1{,}67 * v)$$

où D est la dose d'UV en mJ/cm², S est l'étendue insolée du revêtement à réticuler, 1 est l'intensité moyenne en W/cm² du rayonnement dans la zone insolée par les lampes UV utilisées pour l'insolation, et v est la vitesse d'avance en m/min du support (1) portant le revêtement adhésif (2) à réticuler.

**18.** Procédé selon l'une des revendications 13 à 17, **caractérisé par** une vitesse d'avance (v) du support (1) portant le revêtement adhésif (2) à réticuler de 10 à 50 m/min, en particulier de 20 à 30 m/min, lors de la réticulation aux UV.

**19.** Procédé selon l'une des revendications 13 à 18, **caractérisé en ce que**, pour la réticulation aux UV de la matière première adhésive utilisée pour le revêtement adhésif (2), on utilise, en plus ou à la place des lampes à vapeur de mercure à moyenne pression, des lampes dopées au gallium, au plomb ou au fer.

**20.** Procédé selon l'une des revendications 13 à 19, **caractérisé en ce que** le revêtement adhésif (2) est porté et/ou maintenu avant ou pendant la réticulation aux UV à une température supérieure à la température ambiante, de préférence à une température supérieure à 100°C, en particulier au moyen de rouleaux chauffants.

**21.** Procédé selon l'une des revendications 14 à 20, **caractérisé en ce que**, lors du transfert du revêtement adhésif (2) sur le support (1), un renfort supplémentaire (4), en particulier sous la forme d'un tissu ou d'un non-tissé, est introduit, en particulier par placage, entre le support (1) et le revêtement adhésif (2).

**22.** Utilisation d'un ruban adhésif technique selon l'une des revendications 1 à 12 à des fins d'étanchéification ou d'isolation.

**23.** Utilisation selon la revendication 22, **caractérisée par** l'usage du ruban adhésif pour fixer des écrans sous toitures, des pare-vapeur, des films perméables à la diffusion et/ou des non-tissés dans le bâtiment et les travaux publics.

Fig.1

Fig.2

Fig.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- CH 687328 A5
- JP 5331435 A
- DE 3935097 A1
- DE 4211448 A1

### In der Beschreibung aufgeführte Nicht-Patentliteratur

- **M. SCHREIBER ; H. BRAUN.** *UV-vernetzbare Haftklebstoffe,* 1994, 141-148